(19) Europäisches Patentamt / European Patent Office / Office européen des brevets

(11) **EP 3 439 080 B1**

(12) **EUROPEAN PATENT SPECIFICATION**

(45) Date of publication and mention of the grant of the patent:
**14.10.2020 Bulletin 2020/42**

(21) Application number: **17773712.9**

(22) Date of filing: **09.02.2017**

(51) Int Cl.:
*H01M 4/24* (2006.01)    *H01M 4/26* (2006.01)
*H01M 4/62* (2006.01)    *H01M 10/30* (2006.01)
*H01M 4/38* (2006.01)    *H01M 4/02* (2006.01)

(86) International application number:
**PCT/JP2017/004794**

(87) International publication number:
**WO 2017/169164 (05.10.2017 Gazette 2017/40)**

(54) **NEGATIVE ELECTRODE FOR ALKALI SECONDARY BATTERY, ALKALI SECONDARY BATTERY INCLUDING NEGATIVE ELECTRODE AND METHOD FOR PRODUCING NEGATIVE ELECTRODE**

NEGATIVELEKTRODE FÜR ALKALISCHE SEKUNDÄRBATTERIE, ALKALISCHE SEKUNDÄRBATTERIE MIT NEGATIVELEKTRODE UND VERFAHREN ZUR HERSTELLUNG EINER NEGATIVELEKTRODE

ÉLECTRODE NÉGATIVE DESTINÉE À UNE PILE ALCALINE RECHARGEABLE, PILE ALCALINE RECHARGEABLE COMPORTANT L'ÉLECTRODE NÉGATIVE, ET PROCÉDÉ DE FABRICATION DE L'ÉLECTRODE NÉGATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2016 JP 2016064446**

(43) Date of publication of application:
**06.02.2019 Bulletin 2019/06**

(73) Proprietor: FDK Corporation
**Tokyo 108-8212 (JP)**

(72) Inventors:
• **SAGUCHI Akira**
  **Tokyo 108-8212 (JP)**

• **ISHIDA Jun**
  **Tokyo 108-8212 (JP)**
• **OHATA Shota**
  **Tokyo 108-8212 (JP)**

(74) Representative: **Epping - Hermann - Fischer Patentanwaltsgesellschaft mbH Schloßschmidstraße 5 80639 München (DE)**

(56) References cited:
EP-A1- 2 224 518    EP-A1- 2 983 236
JP-A- H0 737 578    JP-A- H05 258 748
JP-A- H08 264 185    JP-A- H10 289 711
JP-A- 2009 526 349    JP-A- 2011 086 468
US-A- 5 702 845    US-A1- 2006 172 197

## Description

### Technical Field

The present invention relates to a negative electrode for an alkali secondary battery, an alkali secondary battery comprising the negative electrode, and a method for producing the negative electrode.

### Background Art

As one type of alkali secondary batteries, nickel hydrogen secondary batteries are known. The nickel hydrogen secondary batteries, from the viewpoint of having a higher capacity and being better also in environmental safety than nickel cadmium secondary batteries, have been used in various types of apparatuses such as various types of portable devices and hybrid electric cars, and have expanded their applications. Since the applications have been thus expanded, it is desired that nickel hydrogen secondary batteries have higher performance.

As one aspect of the performance to be made higher required for the nickel hydrogen secondary batteries, there is a low-temperature discharge characteristic. Here, the low-temperature discharge characteristic is an extent of how deeply discharge can be carried out in a low-temperature environment; and batteries excellent in the low-temperature discharge characteristic refer to batteries capable of discharging in a high capacity even in a low-temperature environment.

In nickel hydrogen secondary batteries, there is made much research in order to improve the low-temperature discharge characteristic. As a battery improved in the low-temperature discharge characteristic, there is known, for example, a nickel hydrogen secondary battery shown in

Patent Document 1. In the nickel hydrogen secondary battery, an improvement in the low-temperature discharge characteristic is attained by a modification of the surface of a hydrogen absorbing alloy.

### Prior Art Document

### Patent Document

Patent Document 1: Japanese Patent Laid-Open No. 2000-030702

EP 2 983 236 A1 discloses is a secondary electrochemical cell comprising a negative electrode, a positive electrode, a porous separator which separates the negative and the positive electrode from each other, and an aqueous alkaline electrolyte with which the electrodes and the separator are impregnated. The negative electrode includes a current collector, a carbon-based storage material, which allows the storage of electric charge in the electrode by the formation of an electrical double layer (Helmholtz double-layer), and iron in metallic and / or oxidized form. The positive electrode includes a current collector and nickel hydroxide and / or nickel oxyhydroxide. The carbon-based storage material is contained in the negative electrode in a proportion of at least 5 wt .-%.

EP 2 224 518 A1 discloses a negative electrode for alkaline storage battery using a hydrogen-absorbing alloy, wherein fluorinated oil, preferably is at least one kind selected from a low polymer of chlorotrifluoroethylene and perfluoropolyether, and a surface active agent are contained.The hydrogen-absorbing alloy is preferably represented by the general formula $Ln_{1-x}Mg_xNi_{y-a-b}Al_aM_b$ wherein Ln is at least one element selected from the group consisting of Zr, Ti and rare-earth elements including Y, M is at least one element selected from the group consisting of V, Nb, Ta, Cr, Mo, Mn, Fe, Co, Ga, Zn, Sn, In, Cu, Si, P and B, $0.05 \leqq x \leqq 0.30$, $0.05 \leqq a \leqq 0.30$, $0 \leqq b \leqq 0.50$ and $2.8 \leqq y \leqq 3.9$.

US 2006 172197 A1 discloses a negative electrode for zinc nickel secondary batteries and the fabrication methods. These negative electrodes contain hydrophobic porous conductive granules such as carbon black granules with a hydrophobic material adsorbed. The fabrication methods for these negative electrodes include the following steps: adding a hydrophobic material to conductive porous granules such as granules in an aqueous solution; stirring said aqueous solution with said conductive porous granules and said hydrophobic material; fabricating the active material with said aqueous solution with said conductive porous granules and said hydrophobic material; and forming said negative electrode with said active material. Batteries with negative electrodes that are embodiments of this invention or are fabricated by the method of this invention are efficient in the recombination of oxygen at the electrodes during charging have low internal pressure, and are not subjected to electrolyte leakage.

US 5 702 845 A is directed to provide a secondary battery using lithium which includes at least a negative electrode, a positive electrode, a separator provided between said negative electrodes and said positive electrode, and an electrolyte, wherein at least either of said negative electrode or said positive includes an active material having porous hollow structure as a host for intercalating/deintercalating guest lithium ion. The secondary battery shows high electric capacity, high charging/discharging efficiency, high energy density, and long cycle life.

JP 5-258748 A discloses in Example 1 a negative electrode of an alkali secondary battery comprising a fluorine based anionic surfactant.

JP 7-37578 A discloses a battery electrode in which a metal foil or a metal porous sheet is used as a support and an electrode active material is supported thereon, and the battery electrode is treated with a surfactant, preferably a fluorosurfactant, as the electrode active material.

JP 8-264185 A discloses a negative electrode constructed by filling a paste containing hydrogen storage alloy powder, a conductive body, and a binder into a collector, wherein preferably Ketjen Black is added as a conductive agent to enhance the conductivity.

JP 2009-526349 A provides a lithium secondary battery comprising a lithium transition metal compound-containing cathode and a graphitized carbon-containing anode with addition of a surfactant to the cathode and/or the anode, whereby the addition of the surfactant improves the wettability of an electrolyte on the electrode, thereby increasing the battery capacity and improving rate properties and cycle properties of the battery, in conjunction with a significant reduction of a manufacturing process time of the battery.

### Summary of the Invention

### Problems to be solved by the Invention

Then, along with the expansion of applications in the above-mentioned various types of devices, the usage condition becomes severer; along therewith, for the nickel hydrogen secondary batteries mounted on these devices, a further improvement in the low-temperature discharge characteristic is demanded.

In conventional nickel hydrogen secondary batteries as represented by Patent Document 1, although the low-temperature discharge characteristic is improved, it is the present situation that the nickel hydrogen secondary batteries are unable to fully adapt to the recent year's severe usage condition. That is, the low-temperature discharge characteristic of the nickel hydrogen secondary batteries are not yet sufficient.

The present invention has been achieved based on the above situation, and an object of the present invention is to provide a negative electrode for an alkali secondary battery which can attain a further improvement of the low-temperature discharge characteristic, an alkali secondary battery comprising the negative electrode, and a method for producing the negative electrode.

### Means for Solving the Problems

According to the present invention, there is provided a negative electrode for an alkali secondary battery according to claim 1 and a method for producing a negative electrode for an alkali secondary battery. Preferred embodiments are set forth in the dependent claims.

### Advantageous Effects of the Invention

In the negative electrode for an alkali secondary battery according to the present invention, the negative electrode mixture comprises a hydrogen absorbing alloy powder composed of particles of a hydrogen absorbing alloy, a powder of an electroconductive agent, and a powder of a negative electrode additive wherein the electroconductive agent is a hollow carbon black whose primary particle has a hollow-shell structure, and the negative electrode additive is a fluorine-containing anionic surfactant. This constitution provides a larger electrode reaction area as the whole negative electrode than conventional ones, and thereby enables an electrochemical reaction to be made active even in a low-temperature environment. Hence, the alkali secondary battery comprising the negative electrode according to the present invention can attain a further improvement of the low-temperature discharge characteristic.

Further the method for producing the negative electrode for an alkali secondary battery according to the present invention comprises a paste-production step of kneading a hydrogen absorbing alloy powder, a powder of an electroconductive agent composed of a hollow carbon black whose primary particle has a hollow-shell structure, a powder of a negative electrode additive composed of a fluorine-containing anionic surfactant and water to thereby produce a paste of a negative electrode mixture, so that the step homogeneously disperses the hollow carbon black and generates a large number of extremely fine bubbles to thereby contribute to an increase in the electrode reaction area of the negative electrode to be obtained. Hence, according to the method for producing the negative electrode for an alkali secondary battery according to the present invention, there can easily be produced the negative electrode for an alkali secondary battery excellent in the low-temperature discharge characteristic.

### Brief Description of the Drawing

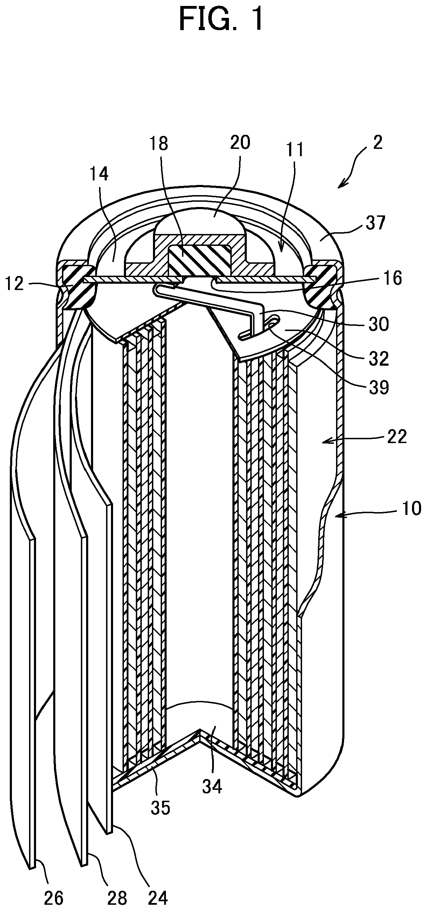

FIG. 1 is a perspective view of a nickel hydrogen secondary battery according to one embodiment of the present invention illustrated by partially breaking the battery.

## Mode for Carrying out the Invention

Hereinafter, the nickel hydrogen secondary battery (hereinafter, referred to simply as a battery) 2 according to the present invention will be described by reference to the drawing.

The battery 2 to which the present invention is applied is not especially limited, but descriptions will be made by taking as an example the case of applying the present invention to an AA-size cylindrical battery 2 illustrated in FIG. 1.

As illustrated in FIG. 1, the battery 2 has an upper end-opened, bottomed, cylinder-shaped outer packaging can 10. The outer packaging can 10 has electroconductivity, and its bottom wall functions as a negative electrode terminal. On the opening of the outer packaging can 10, a sealing body 11 is fixed. The sealing body 11 comprises a lid plate 14 and a positive electrode terminal 20, and seals the outer packaging can 10 and provides the positive electrode terminal 20. The lid plate 14 is a disc-shaped member having electroconductivity. In the opening of the outer packaging can 10, there are disposed the lid plate 14 and a ring-shaped insulating packing 12 encircling the lid plate 14, and the insulating packing 12 is fixed on an opening edge 37 of the outer packaging can 10 by caulking the opening edge 37 of the outer packaging can 10. That is, the lid plate 14 and the insulating packing 12 mutually cooperatively block hermetically the opening of the outer packaging can 10.

Here, the lid plate 14 has a central throughhole 16 on its center, and on the outer surface of the lid plate 14, a rubber-made valve disc 18 to close the central throughhole 16 is disposed. Further to the outer surface of the lid plate 14, the metal-made positive electrode terminal 20 taking on a cylindrical shape having a flange so as to cover the valve disc 18 is electrically connected. The positive electrode terminal 20 presses the valve disc 18 toward the lid plate 14. Then, on the positive electrode terminal 20, there is opened a vent hole not illustrated in figure.

In the usual time, the central throughhole 16 is hermetically closed by the valve disc 18. On the other hand, if gas is generated in the outer packaging can 10 and the internal pressure is raised, the valve disc 18 is compressed by the internal pressure and the central throughhole 16 is opened; consequently, the gas is released from in the outer packaging can 10 through the central throughhole 16 and the vent hole (not illustrated in figure) of the positive electrode terminal 20 to the outside. That is, the central throughhole 16, the valve disc 18 and the positive electrode terminal 20 form a safety valve for the battery.

An electrode group 22 is accommodated in the outer packaging can 10. The electrode group 22 is composed of a strip positive electrode 24, negative electrode 26 and separator 28, and these are spirally wound in the state that the separator is interposed between the positive electrode 24 and the negative electrode 26. That is, the positive electrode 24 and the negative electrode 26 are mutually stacked through the separator 28. The outermost periphery of the electrode group 22 is formed of a part (outermost peripheral part) of the negative electrode 26, and contacts with the inner wall of the outer packaging can 10. That is, the negative electrode 26 and the outer packaging can 10 are mutually electrically connected.

Then, in the outer packaging can 10, a positive electrode lead 30 is disposed between one end of the electrode group 22 and the lid plate 14. In detail, one end of the positive electrode lead 30 is connected to the positive electrode 24, and the other end thereof is connected to the lid plate 14. Therefore, the positive electrode terminal 20 and the positive electrode 24 are mutually electrically connected through the positive electrode lead 30 and the lid plate 14. Here, between the lid plate 14 and the electrode group 22, an upper circular insulating member 32 is disposed, and the positive electrode lead 30 extends by being passed through a slit 39 provided in the upper insulating member 32. Further also between the electrode group 22 and the bottom part of the outer packaging can 10, a lower circular insulating member 34 is disposed.

Further, in the outer packaging can 10, a predetermined amount of an alkali electrolyte solution (not shown in figure) is injected. The alkali electrolyte solution is impregnated in the electrode group 22, and advances an electrochemical reaction (charge and discharge reaction) in charge and discharge between the positive electrode 24 and the negative electrode 26. As the alkali electrolyte solution, it is preferable to use an alkali electrolyte solution comprising at least one of KOH, NaOH and LiOH as a solute.

As a material of the separator 28, there can be used, for example, a polyamide fiber-made nonwoven fabric or a nonwoven fabric made of a polyolefin such as polyethylene or polypropylene, imparted with a hydrophilic functional group.

The positive electrode 24 is composed of an electroconductive positive electrode base material having a porous structure, and a positive electrode mixture held in pores of the positive electrode base material.

As such a positive electrode base material, for example, a sheet of a nickel foam can be used.

The positive electrode mixture comprises a positive electrode active substance particle and a binder. Then as required, positive electrode auxiliary additives may be added to the positive electrode mixture. The binder mutually binds the positive electrode active substance particles and also functions to cause the positive electrode active substance particle to bind with the positive electrode base material. Here, as the binder, there can be used, for example, a carboxymethylcellulose, a methylcellulose, a PTFE (polytetrafluoroethylene) dispersion, or an HPC (hydroxypropylcellulose) dispersion. As the positive electrode active substance particle, there is used a nickel hydroxide particle usually used for nickel hydrogen secondary batteries. It is preferable to adopt, as the nickel hydroxide particle, a higher-order nickel hydroxide particle.

Further it is preferable to use, as the nickel hydroxide particle, one comprising Co as a solid solution component. The Co as a solid solution component contributes to the improvement of the electroconductivity between the positive electrode active substance particles, and improves the charge acceptability. Here, when the content of Co comprised as a solid solution component in the nickel hydroxide particle is low, the effect of improving the charge acceptability is small; and conversely when being too high, the particle growth of the nickel hydroxide particle becomes inhibited. Hence, it is preferable to use, as the nickel hydroxide particle, one comprising 0.5% by mass or more and 5.0% by mass or less of Co as a solid solution component.

Then, it is preferable to make the nickel hydroxide particle to further comprise Zn as a solid solution component. Here, the Zn suppresses the expansion of the positive electrode accompanied by the progress of the charge and discharge cycles, and contributes to the improvement of the cycle lifetime characteristics of the battery.

It is preferable to make the content of Zn comprised as a solid solution component in the nickel hydroxide particle to be 2.0% by mass or higher and 5.0% by mass or lower with respect to the nickel hydroxide.

Further it is preferable to cover the surface of the nickel hydroxide particle with a surface layer composed of a cobalt compound. It is preferable to adopt, as the surface layer, a higher-order cobalt compound layer composed of a cobalt compound order-heightened to tri- or more valent. The higher-order cobalt compound layer is excellent in electroconductivity, and forms an electroconductive network. It is preferable to adopt, as the higher-order cobalt compound layer, a layer composed of a cobalt compound, such as cobalt oxyhydroxide (CoOOH), order-heightened to tri- or more valent.

As described above, the positive electrode active substance particle is produced by a production method usually used for nickel hydrogen secondary batteries.

Then, the positive electrode 24 can be produced, for example, as follows.

First, a positive electrode mixture slurry comprising the positive electrode active substance particle, water and the binder is prepared. The prepared positive electrode mixture slurry is filled, for example, in a foamed nickel sheet, and dried. After the drying, the foamed nickel sheet filled with the nickel hydroxide particle and the like is rolled and then cut to thereby fabricate the positive electrode 24.

Then, the negative electrode 26 will be described.

The negative electrode 26 has a strip electroconductive negative electrode core body, and a negative electrode mixture is held on the negative electrode core body.

The negative electrode core body is composed of a metal material sheet having distributed throughholes, and for example, a punching metal sheet can be used. The negative electrode mixture is not only filled in the throughholes of the negative electrode core body but also held as layers on both surfaces of the electrolyte core body.

The negative electrode mixture comprises a hydrogen absorbing alloy particle capable of absorbing and desorbing hydrogen as a negative electrode active substance, an electroconductive agent, a binder and a negative electrode additive. Further as required, negative electrode auxiliary additives may be added to the negative electrode mixture.

The binder mutually binds the hydrogen absorbing alloy particles, the electroconductive agent and the like, and simultaneously functions to bind the hydrogen absorbing alloy particles, the electroconductive agent and the like to the negative electrode core body. Here, the binder is not especially limited, and there can be used, for example, a binder usually used for nickel hydrogen secondary batteries, such as a hydrophilic or hydrophobic polymer.

A hydrogen absorbing alloy in the hydrogen absorbing alloy particle is not especially limited, and there can be used a hydrogen absorbing alloy usually used for nickel hydrogen secondary batteries. Here, as a preferable hydrogen absorbing alloy, there can be used a rare earth element-Mg-Ni-based hydrogen absorbing alloy comprising a rare earth element, Mg and Ni.

As the electroconductive agent, there is used a hollow carbon black whose primary particle has a hollow-shell structure. Here, the carbon black refers to a microparticle of carbon having a diameter of about 3 to 500 nm. Usual carbon black has a compact interior of its primary particle. The hollow carbon black to be used in the present invention, however, has the interior of its primary particle having a void. That is, a portion of the carbon excluding the void assumes a shape like a shell. Therefore, in the present invention, the structure in which the carbon assumes a shape like a shell and has a void in its interior is determined to be called a hollow-shell structure.

As the hollow carbon black, it is preferable to use one having a voidage of 55% or higher, and it is more preferable to use one having a voidage of 60% or higher and 80% or lower. Further as the hollow carbon black, it is preferable to use one having a specific surface area determined by a BET method of 700 $m^2$/g or larger and 3,000 $m^2$/g or smaller, and it is more preferable to use one having the specific surface area of 800 $m^2$/g or larger and 1,500 $m^2$/g or smaller.

When the hollow carbon black having such a hollow-shell structure is used as the electroconductive agent, the specific surface area as the whole negative electrode can be increased and along therewith, the electrode reaction area can be increased. Hence, use of such an electroconductive agent contributes to the improvement of the low-temperature discharge characteristic of the nickel hydrogen secondary battery.

According to the present invention, 0.25 parts by mass or more and 0.50 parts by mass or less of the powder of the electroconductive agent composed of the hollow carbon black with respect to 100 parts by mass of the hydrogen absorbing alloy powder composed of the hydrogen absorbing alloy particle are added. When the addition amount of the powder of the electroconductive agent composed of the hollow carbon black is smaller than 0.25 parts by mass, the electroconductivity becomes insufficient, and the low-temperature discharge characteristic lowers. On the other hand, when the addition amount thereof exceeds 0.50 parts by mass, the effect of the improvement of the low-temperature discharge characteristic saturates and furthermore due to the lowness of the bulk density of the hollow carbon black, the thickness of an obtained negative electrode plate increases and it becomes difficult to accommodate the negative electrode plate in the outer packaging can.

Then, as the negative electrode additive, a fluorine-containing anionic surfactant is used. The fluorine-containing anionic surfactant homogeneously disperses the powder of the electroconductive agent in a negative electrode mixture paste in a process of production of the negative electrode, and forms extremely fine bubbles in the $\mu$m order. Such extremely fine bubbles remain as fine voids also after the negative electrode mixture is dried, and contribute to the increase of the electrode reaction area in the negative electrode.

The fluorine-containing anionic surfactant is superior in the alkali resistance to surfactants of hydrocarbon chains, and is suitable because not decomposing in the battery and not adversely affecting the battery reaction.

As such a fluorine-containing anionic surfactant, it is preferable to use a perfluorobutanesulfonate salt. Then, as the perfluorobutanesulfonate salt, it is preferable to use potassium perfluorobutanesulfonate, sodium perfluorobutanesulfonate, lithium perfluorobutanesulfonate, cesium perfluorobutanesulfonate, rubidium perfluorobutanesulfonate or the like.

It is preferable to add 0.01 parts by mass or more and 0.05 parts by mass or less of the powder of the negative electrode additive composed of the fluorine-containing anionic surfactant with respect to 100 parts by mass of the hydrogen absorbing alloy powder composed of the hydrogen absorbing alloy particle. When the addition amount of the powder of the negative electrode additive composed of the fluorine-containing anionic surfactant is smaller than 0.01 parts by mass, the ability to disperse the powder of the electroconductive agent, that is, the dispersibility becomes insufficient. On the other hand, when the addition amount of the powder of the negative electrode additive composed of the fluorine-containing anionic surfactant exceeds 0.05 parts by mass, relatively large bubbles in the mm order are formed in a negative electrode mixture paste in the process of production of the negative electrode. Such relatively large bubbles remain also after the negative electrode mixture is dried, and end in forming large irregularities on the negative electrode surface. Such irregularities have risk of causing the internal short circuit in the battery. Further the fluorine-containing anionic surfactant has no electroconductivity and when the addition amount thereof is increased, inhibits the discharge reaction of the negative electrode. Therefore, it is preferable to make the addition amount of the powder of the negative electrode additive composed of the fluorine-containing anionic surfactant to be 0.05 parts by mass or smaller.

The negative electrode 26 can be produced, for example, as follows.

First, the hydrogen absorbing alloy powder composed of the hydrogen absorbing alloy particle, the powder of the electroconductive agent composed of the hollow carbon black whose primary particle has a hollow-shell structure, the powder of the negative electrode additive composed of the fluorine-containing anionic surfactant and water are prepared in respective predetermined amounts (preparation step) .

Then, the prepared hydrogen absorbing alloy powder, powder of the electroconductive agent powder, binder and water are kneaded to thereby produce a negative electrode mixture paste (paste production step). This kneading operation in the paste production step homogeneously disperses the powder of the electroconductive agent and generates extremely fine bubbles in the negative electrode mixture paste by the action of the negative electrode additive.

The negative electrode core body is coated with the obtained negative electrode mixture paste (paste coating step). Thereafter, the resultant is dried (drying step). After the negative electrode mixture paste is dried, the negative electrode core body on which the negative electrode mixture comprising the hydrogen absorbing alloy particle and the like are adhered is subjected to rolling and cutting to thereby fabricate the negative electrode 26. The positive electrode 24 and the negative electrode 26 fabricated as in the above are spirally wound in the state that the separator 28 is interposed to thereby form the electrode group 22.

The electrode group 22 thus obtained is accommodated in the outer packaging can 10. Successively, a predetermined amount of an alkali electrolyte solution is injected in the outer packaging can 10. Thereafter, the outer packaging can 10 accommodating the electrode group 22 and the alkali electrolyte solution is sealed with the sealing body 11 equipped with the positive electrode terminal 20 to thereby obtain the battery 2 according to the present invention. The obtained battery 2 is subjected to an initial activation treatment to be thereby put in a usable state.

**[Examples]**

1. Production of batteries

(Example 1)

(1) Fabrication of a positive electrode

Nickel sulfate, zinc sulfate and cobalt sulfate were weighed so that with respect to Ni, Zn became 2.5% by mass and Co became 1.0% by mass, and added to a 1N sodium hydroxide aqueous solution comprising ammonium ions to thereby prepare a mixed aqueous solution. While the obtained mixed aqueous solution was stirred, a 10N sodium hydroxide aqueous solution was little by little added to the mixed aqueous solution to be allowed to react to thereby cause base particles composed of nickel hydroxide particles comprising nickel hydroxide as a main component and comprising Zn and Co as solid solution components to be produced by stabilizing the pH during the reaction at 13 to 14.

The obtained base particles were three times washed with pure water of a volume 10 times that of the base particles, and were subjected to a dehydration and drying treatment. For the obtained base particles, the particle diameter was measured by using a laser diffraction scattering-type particle size distribution analyzer, and as a result, the volume-average particle diameter (MV) of the base particles was 8 $\mu$m.

Then, the obtained base particles were charged in a cobalt sulfate aqueous solution, and while the cobalt sulfate aqueous solution was stirred, a 1 mol/l sodium hydroxide aqueous solution was little by little dropped to be allowed to react to thereby produce a precipitate while the pH during the reaction was kept at 11. Then, the produced precipitate was filtered off, and washed with pure water, and thereafter vacuum dried. Thereby, there were obtained intermediate product particles each having the base particle 38 as their core and having a layer of a 5-mass% cobalt hydroxide on the surface of the core. Then, the thickness of the layer of cobalt hydroxide was about 0.1 $\mu$m.

Then, the intermediate product particles were charged in a 25-mass% sodium hydroxide aqueous solution. Here, when the mass of a powder composed of the intermediate product particles was taken to be P, and the mass of the sodium hydroxide aqueous solution was taken to be Q, the mass ratio of these masses was set so that P : Q became 1 : 10. Then, the sodium hydroxide aqueous solution containing the powder of the intermediate product particles added therein was subjected to a heat treatment at a temperature of 85°C held for 8 hours under stirring.

The powder composed of the intermediate product particles having been subjected to the heat treatment was washed with pure water, and dried by being exposed to warm air of 65°C. Thereby, there was obtained a positive electrode active substance powder composed of positive electrode active substance particles having a surface layer composed of a higher-order cobalt oxide on the surface of the base particles composed of the nickel hydroxide particles comprising Zn and Co as solid solution components.

Then, to 95 parts by mass of the positive electrode active substance powder composed of the nickel hydroxide particle fabricated as described above, 3.0 parts by mass of a powder of zinc oxide, 2.0 parts by mass of a powder of cobalt hydroxide, and 50.0 parts by mass of water comprising 0.2 part by mass of a powder of a hydroxypropylcellulose as a binder were added, and kneaded to thereby prepare a positive electrode mixture slurry. Then, the positive electrode mixture slurry was filled in a sheet nickel foam as a positive electrode base material. Here, the nickel foam used was one having a surface density (basis weight) of about 600 g/m$^2$, a porosity of 95% and a thickness of about 2 mm.

After the nickel foam filled with the positive electrode mixture slurry was dried, the nickel foam filled with the positive electrode mixture was so regulated and rolled that the filling density of the positive electrode active substance calculated by the following expression (1) became 2.9 g/cm$^3$, and thereafter, cut into a predetermined size to thereby obtain a positive electrode 24 for an AA size composed of a non-sintered nickel electrode.

```
Filling density of the positive electrode active substance
[g/cm³] = a mass of the positive electrode mixture [g] / (a
height of the electrode [cm] × a length of the electrode
[cm] × a thickness of the electrode [cm] − a mass of the
nickel foam [g] / a specific gravity of nickel [g/cm³]) ···
(1)
```

(2) Fabrication of a negative electrode

Each metal material of La, Sm, Mg, Ni and Al was mixed so as to become a predetermined molar ratio, and thereafter charged and dissolved in an induction melting furnace, and cooled to thereby fabricate an ingot.

Then, the ingot was subjected to a heat treatment in an argon gas atmosphere at 1,000°C for 10 hours to be homogenized, and thereafter mechanically crushed in an argon gas atmosphere to thereby obtain a rare earth element-Mg-Ni-based hydrogen absorbing alloy powder. For the obtained rare earth element-Mg-Ni-based hydrogen absorbing alloy powder, the particle size distribution was measured by a laser diffraction scattering-type particle size analyzer (apparatus name: SRA-150, manufactured by MicrotracBEL Corp.). As a result, the average particle diameter corresponding to 50% of cumulation in terms of mass was 65 $\mu$m.

The composition of the hydrogen absorbing alloy powder was analyzed by an inductively coupled plasma spectroscopy (ICP), and was $La_{0.30}SM_{0.70}Mg_{0.10}Ni_{3.33}Al_{0.17}$. Further the X-ray diffractometry (XRD) was carried out on the hydrogen absorbing alloy powder, and the crystal structure was a $Ce_2Ni_7$ type being a so-called superlattice structure.

To 100 parts by mass of the obtained hydrogen absorbing alloy powder, 0.50 parts by mass of a powder of an electroconductive agent composed of a hollow carbon black whose primary particle has a hollow-shell structure, 0.01 parts by mass of a powder of potassium perfluorobutanesulfonate, 1.0 part by mass of a powder of a styrene butadiene rubber, 0.25 parts by mass of a powder of sodium polyacrylate, 0.05 parts by mass of a powder of a carboxymethylcellulose, and 20 parts by mass of water were added and kneaded in an environment of 25°C to thereby prepare a negative electrode mixture paste.

Here, the above hollow carbon black used was Ketjen Black(R), manufactured by Lion Specialty Chemicals Co., Ltd. With respect to the physical properties of the hollow carbon black, the specific surface area by a BET method was 1,270 $m^2$/g; the voidage was 80%; and the primary particle diameter was 34.0 nm.

The negative electrode mixture paste was applied on both surfaces of a punching metal sheet as a negative electrode substrate so as to be uniform and have a constant thickness. Further also in throughholes, the negative electrode mixture paste was filled. Here, the punching metal sheet was an iron-made strip body in which a large number of the throughholes were perforated, and had a thickness of 60 $\mu$m, and had a nickel plating on its surface.

After the negative electrode mixture paste was dried, the punching metal sheet holding the negative electrode mixture was so regulated and rolled that the filling density of the hydrogen absorbing alloy (hereinafter, referred to as hydrogen absorbing alloy filling density) calculated by the following expression (2) became 5.5 g/cm³, and thereafter cut into a predetermined size to thereby obtain a negative electrode 26 for an AA size.

```
Filling density of the hydrogen absorbing alloy [g/cm³] = a
mass of the hydrogen absorbing alloy [g] / (a height of the
electrode [cm] × a length of the electrode [cm] × a
thickness of the electrode [cm] − a mass of the punching
metal sheet [g] / a specific gravity of iron [g/cm³]) ⋯ (2)
```

(3) Assembling of a nickel hydrogen secondary battery

The obtained positive electrode 24 and negative electrode 26 were spirally wound in the state that a separator 28 was interposed therebetween to thereby fabricate an electrode group 22. The separator 28 used here for fabrication of the electrode group 22 was one being composed of a polypropylene fiber-made nonwoven fabric having been subjected to a sulfonation treatment and having a thickness of 0.1 mm (basis weight: 40 g/m²). Meanwhile, there was prepared an alkali electrolyte solution composed of an aqueous solution comprising KOH, NaOH and LiOH as solutes. The alkali electrolyte solution had a mixing mass ratio of KOH : NaOH : LiOH = 15 : 2 : 1, and had a specific gravity of 1.30.

Then, the above electrode group 22 was accommodated in a bottomed cylinder-shaped outer packaging can 10, and 2.4 g of the prepared alkali electrolyte solution was injected. Thereafter, an opening of the outer packaging can 10 was closed by a sealing body 11 to thereby assemble an AA-size nickel hydrogen secondary battery 2 having a nominal capacity of 1,500 mAh.

(4) Initial activation treatment

There was repeated three times a charge and discharge cycle in which a charge and discharge operation of causing the obtained battery 2 to be charged at 1.0 It for 16 hours in an environment of a temperature of 25°C and thereafter to be discharged at 1.0 It until the battery voltage became 1.0 V was taken as one cycle. The battery 2 was thus subjected to the initial activation treatment, being put in the state of being ready to be used.

(Example 2)

A nickel hydrogen secondary battery was fabricated as in Example 1, except for altering the addition amount of the powder of potassium perfluorobutanesulfonate to 0.02 parts by mass.

(Example 3)

A nickel hydrogen secondary battery was fabricated as in Example 1, except for altering the addition amount of the powder of potassium perfluorobutanesulfonate to 0.05 parts by mass.

(Comparative Example 1)

A nickel hydrogen secondary battery was fabricated as in Example 1, except for no addition of the powder of the electroconductive agent composed of the hollow carbon black and the powder of potassium perfluorobutanesulfonate.

(Comparative Example 2)

A nickel hydrogen secondary battery was fabricated as in Example 1, except for no addition of the powder of potassium perfluorobutanesulfonate.

(Comparative Example 3)

A nickel hydrogen secondary battery was fabricated as in Example 1, except for addition of 0.25 parts by mass of the powder of the electroconductive agent composed of the hollow carbon black and no addition of the powder of potassium perfluorobutanesulfonate.

(Comparative Example 4)

A nickel hydrogen secondary battery was fabricated as in Example 1, except for addition of 1.00 part by mass of the powder of the electroconductive agent composed of the hollow carbon black and no addition of the powder of potassium perfluorobutanesulfonate. 2. Evaluation of the nickel hydrogen secondary batteries (1) Test for the low-temperature discharge characteristic

The fabricated batteries of Examples 1 to 3 and Comparative Examples 1 to 4 were each charged at 1.0 It in an environment of 25°C until the battery voltage, after reaching a maximum value, decreased by 10 mV, and thereafter allowed to stand for 3 hours in an environment of -10°C.

Then, the battery after the being left for 3 hours was discharged at 1.0 It until the battery voltage became 1.0 V in an environment of -10°C; and the discharge capacity at this time was determined.

Here, with the value of the discharge capacity of Comparative Example 1 being taken to be 100, the ratio of the value of the discharge capacity of the each battery to the 100 was determined; and the result is shown as a ratio of the low-temperature discharge characteristic in Table 1. Here, it is indicated that the larger the value of the ratio of the low-temperature discharge characteristic, the better the low-temperature discharge characteristic.

[Table 1]

| | Addition Amount of Hollow Carbon Black [parts by mass] | Addition Amount of Potassium Perfluorobutanesulfonate [parts by mass] | Ratio of Low-Temperature Discharge Characteristic |
|---|---|---|---|
| Example 1 | 0.50 | 0.01 | 114 |
| Example 2 | 0.50 | 0.02 | 122 |
| Example 3 | 0.50 | 0.05 | 113 |
| Comparative Example 1 | none | none | 100 |

(continued)

| | Addition Amount of Hollow Carbon Black [parts by mass] | Addition Amount of Potassium Perfluorobutanesulfonate [parts by mass] | Ratio of Low-Temperature Discharge Characteristic |
|---|---|---|---|
| Comparative Example 2 | 0.50 | none | 107 |
| Comparative Example 3 | 0.25 | none | 107 |
| Comparative Example 4 | 1.00 | none | 108 |

(2) Consideration

(i) The battery of Comparative Example 1, using a negative electrode comprising neither of the hollow carbon black and potassium perfluorobutanesulfonate, had a ratio of the low-temperature discharge characteristic of 100. By contrast, the batteries of Comparative Examples 2 to 4, comprising the hollow carbon black and no potassium perfluorobutanesulfonate, had a ratio of the low-temperature discharge characteristic of 107 to 108, revealing that the low-temperature discharge characteristic was improved more than in the battery of Comparative Example 1. Hence, it can be said that the addition of the hollow carbon black has an effect on the improvement of the low-temperature discharge characteristic.

(ii) Meanwhile, comparing Comparative Examples, in Comparative Example 3, the addition amount of the hollow carbon black was 0.25 parts by mass, and the ratio of the low-temperature discharge characteristic was 107. By contrast, in Comparative Example 2, although the addition amount of the hollow carbon black was 0.50 parts by mass, which was an amount twice that in Comparative Example 3, the ratio of the low-temperature discharge characteristic was 107, which was the same as that of Comparative Example 3. Further in Comparative Example 4, although the addition amount of the hollow carbon black was 1.00 part by mass, which was an amount four times that in Comparative Example 3, the ratio of the low-temperature discharge characteristic was 108, which was only in a slightly improved degree. Hence, although the addition of the hollow carbon black improves the ratio of the low-temperature discharge characteristic, it can be said that even when 0.50 parts by mass or more thereof is added, the effect of improving the ratio of the low-temperature discharge characteristic ends in saturating. Further the ratio of the low-temperature discharge characteristic has a limit of 108, which cannot sufficiently meet recent year's usage condition.

(iii) It is found that the batteries of Examples 1 to 3, using a negative electrode comprising both of the hollow carbon black and potassium perfluorobutanesulfonate, were improved more in the low-temperature discharge characteristic than Comparative Examples 2 to 4, using a negative electrode comprising no potassium perfluorobutanesulfonate.

This is conceivably because that since by the potassium perfluorobutanesulfonate, the hollow carbon black being an electroconductive agent was more homogeneously dispersed, and extremely fine bubbles were formed and became voids in the negative electrode, the electrode reaction area in the whole negative electrode increased and the battery reaction was thereby made to be active even in a low temperature, more improving the ratio of the low-temperature discharge characteristic.

Here, with respect to the addition amount of potassium perfluorobutanesulfonate, in the case of 0.02 parts by mass in Example 2, the ratio of the low-temperature discharge characteristic was 122; and it can be said that Example 2 was the best aspect. In the case of the aspect of Example 2, it is conceivable that the dispersibility of the hollow carbon black was sufficiently high and the effect of increasing the electrode reaction area was sufficiently exhibited.

In the case of Example 1, in which the addition amount of potassium perfluorobutanesulfonate was 0.01 parts by mass, the ratio of the low-temperature discharge characteristic was 114, which was better than in Comparative Examples 1 to 4, but lower than in Example 2. This is conceivably because the addition amount of potassium perfluorobutanesulfonate was not sufficient and the dispersibility of the hollow carbon black and the effect of increasing the electrode reaction area were not exhibited so much as in Example 2.

In the case of Example 3, in which the addition amount of potassium perfluorobutanesulfonate was 0.05 parts by mass, the ratio of the low-temperature discharge characteristic was 113, which was better than in Comparative Examples 1 to 4, but lower than in Example 2. This is conceivably because the addition amount of potassium perfluorobutanesulfonate, which had no electroconductivity, was larger than in Example 2, and the discharge reaction was thereby inhibited.

From the above, it can be said that when the hollow carbon black is combined with potassium perfluorobutanesulfonate, the synergetic effect thereof improves the ratio of the low-temperature discharge characteristic more largely than conventionally, and the improvement of the low-temperature discharge characteristic of the battery can be attained. Here, in the present embodiment, description of use only of potassium perfluorobutanesulfonate have been made, but there can be attained the similar effect also when there is used another perfluorobutanesulfonate salt, that is, sodium perfluorobutanesulfonate, lithium perfluorobutanesulfonate, cesium perfluorobutanesulfonate, rubidium perfluorobutanesulfonate, or the like.

Here, the present invention is not limited to the above embodiment and Examples, and various changes and modifications may be made. The battery to which the present invention is applied suffices as long as being an alkali secondary battery, and includes, in addition to the nickel hydrogen secondary battery, for example, nickel zinc secondary batteries. Further the structure of the battery is not especially limited, and may also be, in addition to a circular one, a rectangular one.

**Explanation of Reference Signs**

2    NICKEL HYDROGEN SECONDARY BATTERY
22    ELECTRODE GROUP
24    POSITIVE ELECTRODE
26    NEGATIVE ELECTRODE
28    SEPARATOR

**Claims**

1.  A negative electrode for an alkali secondary battery, comprising:

    a negative electrode core body; and
    a negative electrode mixture held on the negative electrode core body,
    wherein the negative electrode mixture comprises a hydrogen absorbing alloy powder composed of a particle of a hydrogen absorbing alloy, a powder of an electroconductive agent, and a powder of a negative electrode additive;
    the electroconductive agent is a hollow carbon black whose primary particle has a hollow-shell structure; and
    the negative electrode additive is a fluorine-containing anionic surfactant,
    wherein the powder of the electroconductive agent composed of the hollow carbon black is added in an amount of 0.25 parts by mass or more and 0.5 parts by mass or less based on 100 parts by mass of the hydrogen absorbing alloy powder.

2.  The negative electrode for an alkali secondary battery according to claim 1, wherein the powder of the negative electrode additive composed of the fluorine-containing anionic surfactant is added in an amount of 0.01 parts by mass or more and 0.05 parts by mass or less based on 100 parts by mass of the hydrogen absorbing alloy powder.

3.  The negative electrode for an alkali secondary battery according to any one of claim 1 or 2, wherein the fluorine-containing anionic surfactant is a perfluorobutanesulfonate salt.

4.  An alkali secondary battery comprising: a container; and an electrode group accommodated together with an alkali electrolyte solution in the container,
    wherein the electrode group is composed of a positive electrode and a negative electrode stacked through a separator; and
    the negative electrode is a negative electrode for an alkali secondary battery according to any one of claims 1 to 3.

5.  A method for producing a negative electrode for an alkali secondary battery, comprising:

    a preparation step of preparing a hydrogen absorbing alloy powder, a powder of an electroconductive agent, a powder of a negative electrode additive, and water in respective predetermined amounts;

a paste-production step of producing a paste of a negative electrode mixture by kneading the prepared hydrogen absorbing alloy powder, powder of the electroconductive agent, powder of the negative electrode additive and water;

a paste-coating step of coating a negative electrode core body with the paste of the negative electrode mixture obtained in the paste-production step; and

a drying step of drying the paste of the negative electrode mixture with which the negative electrode core body is coated,

wherein the electroconductive agent is a hollow carbon black whose primary particle has a hollow-shell structure; and

the negative electrode additive is a fluorine-containing anionic surfactant,

wherein the powder of the electroconductive agent composed of the hollow carbon black is added in an amount of 0.25 parts by mass or more and 0.5 parts by mass or less based on 100 parts by mass of the hydrogen absorbing alloy powder.

**Patentansprüche**

1. Negative Elektrode für eine Alkali-Sekundärbatterie, umfassend:

   einen negativen Elektrodenkernkörper; und
   ein auf dem negativen Elektrodenkernkörper gehaltenes negatives Elektrodengemisch,
   wobei das negative Elektrodengemisch ein wasserstoffabsorbierendes Legierungspulver, das aus einem Partikel einer wasserstoffabsorbierenden Legierung besteht, ein Pulver aus einem elektroleitfähigen Mittel und ein Pulver aus einem negativen Elektrodenadditiv umfasst;
   es sich bei dem elektroleitfähigen Mittel um einen hohlen Ruß handelt, dessen primärer Partikel eine Hohlschalenstruktur hat; und
   es sich bei dem negativen Elektrodenadditiv um ein fluorhaltiges anionisches Tensid handelt,
   wobei das Pulver aus dem elektroleitfähigen Mittel, das aus dem hohlen Ruß besteht, in einer Menge von 0,25 Masseteilen oder mehr und 0,5 Masseteilen oder weniger auf Grundlage von 100 Masseteilen des wasserstoffabsorbierenden Legierungspulvers zugesetzt wird.

2. Negative Elektrode für eine Alkali-Sekundärbatterie nach Anspruch 1, wobei das Pulver aus dem negativen Elektrodenadditiv, das aus dem fluorhaltigen anionischen Tensid besteht, in einer Menge von 0,01 Masseteilen oder mehr und 0,05 Masseteilen oder weniger auf Grundlage von 100 Masseteilen des wasserstoffabsorbierenden Legierungspulvers zugesetzt wird.

3. Negative Elektrode für eine Alkali-Sekundärbatterie nach einem der Ansprüche 1 oder 2, wobei es sich bei dem fluorhaltigen anionischen Tensid um ein Perfluorbutansulfonatsalz handelt.

4. Alkali-Sekundärbatterie, umfassend: einen Behälter; und eine Elektrodengruppe, die zusammen mit einer Alkalielektrolytlösung in dem Behälter aufgenommen ist,
   wobei die Elektrodengruppe aus einer positiven Elektrode und einer negativen Elektrode besteht, die durch einen Separator gestapelt sind; und
   es sich bei der negativen Elektrode um eine negative Elektrode für eine Alkali-Sekundärbatterie nach einem der Ansprüche 1 bis 3 handelt.

5. Verfahren zum Herstellen einer negativen Elektrode für eine Alkali-Sekundärbatterie, umfassend:

   einen Vorbereitungsschritt, in dem ein wasserstoffabsorbierendes Legierungspulver, ein Pulver aus einem elektroleitfähigen Mittel, ein Pulver aus einem negativen Elektrodenadditiv und Wasser in jeweiligen vorbestimmten Mengen vorbereitet werden;
   einen Pastenproduktionsschritt, bei dem eine Paste aus einem negativen Elektrodengemisch durch Verkneten des vorbereiteten wasserstoffabsorbierenden Legierungspulvers, des Pulvers aus dem elektroleitfähigen Mittel, des Pulvers aus dem negativen Elektrodenadditiv und Wasser produziert wird;
   einen Pastenbeschichtungsschritt, bei dem ein negativer Elektrodenkernkörper mit der im Pastenproduktionsschritt erhaltenen Paste aus dem negativen Elektrodengemisch beschichtet wird; und
   ein Trocknungsschritt, bei dem die Paste aus dem negativen Elektrodengemisch getrocknet wird, mit dem der negative Elektrodenkernkörper beschichtet ist,

wobei es sich bei dem elektroleitfähigen Mittel um einen hohlen Ruß handelt, dessen primärer Partikel eine Hohlschalenstruktur hat; und

es sich bei dem negativen Elektrodenadditiv um ein fluorhaltiges anionisches Tensid handelt,

wobei das Pulver aus dem elektroleitfähigen Mittel, das aus dem hohlen Ruß besteht, in einer Menge von 0,25 Masseteilen oder mehr und 0,5 Masseteilen oder weniger auf Grundlage von 100 Masseteilen des wasserstoffabsorbierenden Legierungspulvers zugesetzt wird.

**Revendications**

1. Électrode négative pour pile alcaline rechargeable, comprenant :

   un corps de noyau d'électrode négative ; et
   un mélange d'électrode négative maintenu sur le corps de noyau d'électrode négative,
   sachant que le mélange d'électrode négative comprend une poudre d'alliage absorbeur d'hydrogène composée d'une particule d'un alliage absorbeur d'hydrogène, d'une poudre d'un agent électroconducteur, et d'une poudre d'un additif d'électrode négative ;
   l'agent électroconducteur est un noir de carbone creux dont la particule primaire a une structure de coque creuse ; et
   l'additif d'électrode négative est un tensio-actif anionique contenant du fluor,
   sachant que la poudre de l'agent électroconducteur composée du noir de carbone creux est ajoutée dans une quantité de 0,25 part en masse ou plus et de 0,5 part en masse ou moins sur la base de 100 parts en masse de la poudre d'alliage absorbeur d'hydrogène.

2. L'électrode négative pour pile alcaline rechargeable selon la revendication 1, sachant que la poudre de l'additif d'électrode négative composée du tensio-actif anionique contenant du fluor est ajoutée dans une quantité de 0,01 part en masse ou plus et 0,05 part en masse ou moins sur la base de 100 parts en masse de la poudre d'alliage absorbeur d'hydrogène.

3. L'électrode négative pour pile alcaline rechargeable selon l'une quelconque des revendications 1 ou 2, sachant que le tensio-actif anionique contenant du fluor est un sel de perfluorobutanesulfonate.

4. Pile alcaline rechargeable comprenant : un récipient ; et un groupe d'électrodes logé conjointement avec une solution d'électrolyte alcaline dans le récipient,
   sachant que le groupe d'électrodes est composé d'une électrode positive et d'une électrode négative empilées via un séparateur ; et
   l'électrode négative est une électrode négative pour pile alcaline rechargeable selon l'une quelconque des revendications 1 à 3.

5. Procédé de production d'une électrode négative pour pile alcaline rechargeable, comprenant :

   une étape de préparation consistant à préparer une poudre d'alliage absorbeur d'hydrogène, une poudre d'un agent électroconducteur, une poudre d'un additif d'électrode négatif, et de l'eau dans des quantités prédéterminées respectives ;
   une étape de production de pâte consistant à produire une pâte d'un mélange d'électrode négative en malaxant la poudre d'alliage absorbeur d'hydrogène préparée, la poudre de l'agent électroconducteur, la poudre de l'additif d'électrode négative et de l'eau ;
   une étape de revêtement de pâte consistant à revêtir un corps de noyau d'électrode négative avec la pâte du mélange d'électrode négative obtenue à l'étape de production de pâte ; et
   une étape de séchage consistant à sécher la pâte du mélange d'électrode négative avec laquelle le corps de noyau d'électrode négative est revêtu,
   sachant que l'agent électroconducteur est un noir de carbone creux dont la particule primaire a une structure de coque creuse ; et
   l'additif d'électrode négative est un tensio-actif anionique contenant du fluor,
   sachant que la poudre de l'agent électroconducteur composée du noir de carbone creux est ajoutée dans une quantité de 0,25 part en masse ou plus et de 0,5 part en masse ou moins sur la base de 100 parts en masse de la poudre d'alliage absorbeur d'hydrogène.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000030702 A
- EP 2983236 A1
- EP 2224518 A1
- US 2006172197 A1
- US 5702845 A
- JP 5258748 A
- JP 7037578 A
- JP 8264185 A
- JP 2009526349 A